# EUROPÄISCHE PATENTSCHRIFT

(11) **EP 1 785 250 B1**
(45) Veröffentlichungstag und Bekanntmachung des Hinweises auf die Patenterteilung: **08.10.2008**
(21) Anmeldenummer: 06022559.6
(22) Anmeldetag: 28.10.2006
(51) Int. Cl.: B29C 33/62, B29C 33/64, B01F 17/00

(54) **Wässriges Trennmittel und seine Verwendung bei der Herstellung von Polyurethan-Formkörpern**
Aqueous releasing agent and its use for producing moulded polyurethane articles
Agent de démoulage à base d'eau et son utilisation pour la fabrication de polyuréthane moulé

(30) Priorität: 12.11.2005 DE 102005054036
(43) Veröffentlichungstag der Anmeldung: 16.05.2007
(73) Patentinhaber: Evonik Goldschmidt GmbH, 45127 Essen (DE)
(72) Erfinder: Althoff, Ralf, 45721 Haltern (DE); Faure, Philippe, 91400 Orsay (FR); Henning, Torsten, 19057 Schwerin (DE)

(56) Entgegenhaltungen:
- DE-A1- 2 702 930
- DE-A1- 4 020 036
- GB-A- 1 470 306
- US-A- 4 131 662
- US-A- 5 738 813

## Beschreibung

Die Erfindung betrifft wässrige Trennmittel und ihre Verwendung bei der Herstellung von Polyurethan-Formkörpern.

Es ist bekannt, dass die zur Herstellung von Formkörpern verwendeten Polyurethansysteme gegenüber den verwendeten Formwerkstoffen, bevorzugt thermisch stark leitfähige Werkstoffe wie Metalle, eine starke Adhäsion zeigen. Daher benötigt man bei der Entformung der Polyurethan-Formkörper Trennmittel, die auf die mit Polyurethanen und/oder der Polyurethanreaktionsmischung in Berührung kommenden Formwandungen, aufgebracht werden.

Solche Trennmittel bestehen aus Dispersionen oder Emulsionen von Wachsen, Seifen, Ölen und/oder Siliconen in Lösungsmitteln wie Kohlenwasserstoffe oder Wasser. Nach Aufbringen des Trennmittels auf die Form verdampft das Lösungsmittel und die nichtflüchtigen trennaktiven Substanzen bilden einen dünnen Trennfilm, damit der Polyurethan-Formkörper nach der Herstellung leicht aus der Form entnommen werden kann.

Neben der eigentlich benötigten Trennwirkung übernimmt das Trennmittel noch weitere Funktionen, so beeinflusst es auch sehr stark die Oberfläche des Polyurethan-Formkörpers, die feinporig bzw. glatt und gleichmäßig sein soll, unter anderem auch, um eine gute Beziehbarkeit der fertigen Formteile mit Stoffen oder Leder zu gewährleisten.

Um die Umweltbelastung mit organischem Material zu reduzieren, besteht ein hohes Interesse an Trennmitteln auf wässriger Basis, die frei von flüchtigem organischem Material sind. Die im Markt befindlichen wässrigen Trennmittel zeigen jedoch gegenüber klassischen, organische Lösungsmittel enthaltenden Trennmitteln den Nachteil, dass nach dem Verdampfen eines Großteils des Wassers immer ein dünner Wasserfilm in der Form zurückbleibt, der sich bei den üblichen Formtemperaturen von 45 bis 80 °C, bevorzugt 50 bis 75 °C, nicht verflüchtigt und mit den Isocyanatverbindungen des Polyurethansystems Reaktionen eingeht, die zu sehr harten Polyharnstoffverbindungen führen. Dadurch werden die Formoberflächen gestört, erhalten einen sogenannten Aufbau und müssen aufwendig gereinigt werden.

Typische Beispiele wässriger Trennmittel mit guter Entformungswirkung sind beispielsweise beschrieben in DE-A-37 42 370 oder DE-A-40 20 036 da, diese als trennwirksame Substanz ungesättigte oligomere oder polymere Kohlenwasserstoffe mit Molekulargewichten von mindestens 500 und Jodzahlen von mindestens 60 enthalten.

Diese Trennmittel zeigen neben dem oben beschriebenen Problem des Polyharnstoffaufbaus auf den Formoberflächen aber noch den weiteren Nachteil, dass die als zähfließendes Öl vorliegende trennwirksame Substanz teilweise dem Druck des eingespritzten und aufschäumenden Polyurethansystems nicht standhält und von der Formoberfläche verdrängt wird, was dazu führen kann, dass das Formteil teilweise an der Form haftet und bei der Entformung an der Formteiloberfläche beschädigt wird.

US-4 131 662 beschreibt einen anderen Trennmitteltyp: eine Suspension von Talkum in einer wässrigen Emulsion mit niedermolekularem organischen Material (Molekulargewicht 200 oder niedriger), bevorzugt Toluol, als formtrennenden Wirkstoff zusammen mit einem organischen Lösungsmittel, das mit dem niedermolekularen organischen Material mischbar ist, bevorzugt Dichlormethan.

Wie bereits beschrieben, ist jedoch die Umweltbelastung mit flüchtigem organischem Material wie es bei Molmassen von 200 oder niedriger vorliegt, nicht akzeptabel.

Aufgabe der vorliegenden Erfindung war es daher, wässrige Formtrennmittel zu finden, die frei von organischen Lösungsmitteln und flüchtigem organischem Material mit Molmassen von 200 oder niedriger sind, eine gute Trennwirkung zeigen, die Oberflächen der Polyurethan-Formkörper günstig beeinflussen, also feinporig, gleichmäßig und glatt hinterlassen, keinen Polyharnstoffaufbau auf den Formoberflächen hinterlassen und einen Trennfilm erzeugen, der nicht vom Druck des eingespritzten und aufschäumenden Polyurethansystems verdrängt werden kann.

Überraschenderweise wurde nun gefunden, dass eine wässrige Dispersion klassischer trennaktiver Substanzen wie Wachse, Seifen, Öle und/oder Siliconen in Mengen von 0,5 bis 40 Gew.-%, bevorzugt 3 bis 20 Gew.-%, in Kombination mit Talkum in Mengen von 0,1 bis 15 Gew.-%, bevorzugt 0,5 bis 10 Gew.-%, bezogen auf die wässrige Gesamtformulierung, diese Aufgabe erfüllt.

Ein Gegenstand der Erfindung sind daher wässrige Dispersionen, enthaltend im Wesentlichen Wasser, trennaktive Mittel und Emulgatoren, welche dadurch gekennzeichnet sind, dass als trennaktive Mittel eine Kombination aus
A) mindestens eines trennaktiven Mittels ausgesucht aus der Gruppe Seifen, Öle, Wachse und Silicone und
B) Talkum, verwendet wird,
wobei die Dispersion
A) 0,5 bis 40 Ges.-% mindestens eines trennaktiven Mittels ausgesucht aus der Gruppe Seifen, Öle, Wachse und Silicone und
B) 0,1 bis 15 Gew.-% Talkum,
C) 0,1 bis 10 Gew.-% Emulgatoren,
D) 0,1 bis 5 Gew.-% Katalysatoren,
E) 0,1 bis 5 Gew.-% Schaumstabilisatoren,
F) 0,1 bis 2 Gew.-% Viskositätsmodifizierer,
G) 0,1 bis 2 Gew.-% übliche Konservierungsmittel, Bakterizide, Fungizide und Antioxidantien und
H) ad 100 Gew.-% Wasser, enthält

Ein weiterer Gegenstand der Erfindung ist die Verwendung dieser Trennmittel bei der Herstellung von Polyurethan-Formkörpern.

Weitere Gegenstände der Erfindung sind durch die Ansprüche gekennzeichnet.

Als Talkum werden anorganische Mineralien aus der Familie der Schichtsilicate, auch Phyllosilicate, bezeichnet, die hauptsächlich aus Magnesiumsilicat bestehen und verschiedene Beimischungen wie Chlorit oder andere Begleitmineralien enthalten. Auch Glimmer (Mica), also Schichtsilicate, in die große Kationen wie K⁺, Na⁺ oder Ca²⁺ eingebaut sind, kommen in Frage.

Bevorzugt wird Talkum mit einer Zusammensetzung von 35 bis 70 Gew.-% SiO₂, 5 bis 40 Ges.-% MgO, 5 bis 20 Ges.-% Al₂O₃ und 1 bis 5 Gew.-% Fe₂O₃, verwendet. Besonders bevorzugt wird lamellares Talkum mit einer Zusammensetzung von 40 bis 50 Gew.-% SiO₂, 25 bis 35 Ges.-% MgO, 7 bis 12 Gew.-% Al₂O₃, 1,5 bis 2,5 Gew.-% Fe₂O₃ und 1 bis 2 Gew.-% CaO verwendet.

Geeignete Talkum-Produkte werden beispielsweise vertrieben unter den Handelsnamen Luzenac^{®}, Mistron^{®}, French Velvet^{®}, Ultrapure Talc^{®} .

Das Talkum verhindert den Polyharnstoffaufbau auf den Formoberflächen. Da es durch Verfestigung des Trennfilms eine Entnahme des durch den verbleibenden nicht verdampften Wasseranteil entstehenden Polyharnstoffs mit jeder Entformung eines Polyurethan-Formkörpers unterstützt, bildet sich kein Aufbau an der Formoberfläche.

Weiterhin stabilisiert das Talkum die häufig als zähfließendes Öl vorliegenden trennaktiven Substanzen, so dass der Trennfilm dem Druck des eingespritzten und aufschäumenden Polyurethansystems standhalten und nicht von der Formoberfläche verdrängt werden kann.

Das Talkum ist besonders hautfreundlich und wird beispielsweise in Babypuder eingesetzt, so dass keine Kontaktallergien zu erwarten sind.

Als klassische trennaktive Substanzen mit mittleren Molmassen größer als 200, bevorzugt 500, können erfindungsgemäß beispielsweise mitverwendet werden:
Wachse, d. h. flüssige, feste, natürliche oder synthetische Wachse, auch oxidiert und/oder teilverseift,
Ester von Carbonsäuren mit Alkoholen oder Fettalkoholen, Metallseifen, wie Alkali- oder Erdalkalimetallsalze von Fettsäuren,
Öle, wie bei Raumtemperatur flüssige oder zähfließende Kohlenwasserstoffe, gegebenenfalls aber nicht bevorzugt, unter Mitverwendung ungesättigter oligomere und/oder polymerer Kohlenwasserstoffe,
Silicone, wie Polydimethylsiloxane, gegebenenfalls substituiert mit aliphatischen oder aromatischen Kolenwasserstoffresten.

Als übliche Hilfs- und Zusatzstoffe können ein oder mehrere Verbindungen ausgesucht aus den Gruppen der
I) Emulgatoren:
   anionische Emulgatoren wie Alkylethercarboxylate, Alkylsulfate, Fettalkoholethoxylatethersulfate, alpha-Olefinsulfonate, Alkylphosphate, Alkylpolyetherphosphate, Alkylsulfosuccinate; nichtionische Emulgatoren wie ethoxylierte Fettalkohole, ethoxylierte Oxoalkohole und andere Alkoholether, Fettamine wie Dimethylalkylamine, Fettsäurealkanolamide, Fettsäureester mit Alkoholen, darunter auch Glycerinester oder Polyglycerinester oder Sorbitolester; kationische Emulgatoren wie sauer gestellte Alkyldimethylamine, quaternäre Stickstoffverbindungen; schließlich zwitterionische Tenside die in Mengen von 0,1 bis 10 Gew.-%, bevorzugt 0,5 bis 6 Gew.-% mitverwendet werden;
II) Katalysatoren:
   solche, die typischerweise für die Polyurethanreaktion verwendet werden, beispielsweise Lewis Säuren wie Zinnverbindungen oder Lewis Basen wie tertiäre Amine;
III) Schaumstabilisatoren:
   Polysiloxan-Polyether-Copolymerisate;
IV) Viskositätsmodifizierer:
   typische Verdicker wie als Carbomere bezeichnete Polyacrylsäurederivate oder andere Polyelektrolytverdicker wie wasserlösliche Cellulosederivate oder auch Xanthan Gum;
V) übliche Konservierungsmittel, Bakterizide, Fungizide und Antioxidantien, eingesetzt werden.

Die erfindungsgemäßen Dispersionen können nach den im Stand der Technik bekannten Verfahren hergestellt werden. Bevorzugt geht man so vor, dass der Emulgator mit trennaktiven Substanzen in geschmolzener Form (unterhalb der Siedetemperatur des Wassers) vorgelegt wird, scherkraftreich ein Teil des Wassers eingetragen wird, dann das restliche Wasser, enthaltend die weiteren Komponenten, scherkraftarm zugegeben wird.

Die Erfindung betrifft weiter die Verwendung der beschriebenen Trennmittel bei der Herstellung von Polyurethan-Formkörpern.

Klassischerweise wird die Form auf die gewünschte Formtemperatur von 45 bis 80 °C, bevorzugt 50 bis 75 °C, gebracht, mit Trennmittel eingesprüht, eine gewisse Zeit - je nach Wasseranteil ca. 1 bis 10 Minuten - gewartet, bis die größte Menge Wasser verdampft ist und dann das reaktive Polyurethansystem aus Polyolen, Polyisocyanaten und gegebenenfalls weiteren Additiven wie Katalysatoren, Schaumstabilisatoren und Treibmitteln, eingepumpt. Die Form wird geschlossen und nach der Aushärtezeit die Form geöffnet und das Formteil entformt.

### Beispiele:

Die folgenden Beispiele dienen zur näheren Beschreibung der Erfindung, ohne sie darauf einzuschränken.

Liste der eingesetzten Substanzen:
- Luzenac^{®} 2 = lamellares Talkum mit SiO₂ 46,0 Gew.-%, MgO 30,5 Gew.-%, Al₂O₃ 9,8 Gew.-%, Fe₂O₃ 2,1 Gew.-%, CaO 1,4 Gew.-%, Hersteller: Luzenac,
- DC^{®} 190 = Polyethersiloxan, Hersteller: Air Products,
- Polyol^{®} 130 = Polybutadien mit mittlerer Molmasse von ca. 3.000 und Iodzahl von ca. 450 g Jod/100g, Hersteller: Degussa,
- Unithox^{®} 450 = ethoxylierter Alkohol mit mittlerer Molmasse ca. 900, enthaltend 50 Gew.-% Ethylenoxid entsprechend dem in Beispiel 1 aus DE-A-40 20 036 verwendeten, Hersteller: Baker Petrolite,
- Fettamin = R-NH₂ mit R = C₁₂₋₂₂ gegebenenfalls verzweigter Alkylrest,
- Mikrowachs = handelsübliche Wachse mit einer Erstarrungstemperatur von 50 bis 90 °C,
- Polyethylenwachs = handelsübliche Wachse mit einer Erstarrungstemperatur von 50 bis 90 °C,
- Desmophen^{®} PU 21IK01 = Polyetherpolyol, Hersteller: Bayer,
- Tegoamin^{®} TA 33, Hersteller: Degussa,
- Tegoamin^{®} AS-1, Hersteller: Degussa,
- Tegostab^{®} EP-K-38 = organomodifiziertes Siloxan, Hersteller: Degussa,
- Suprasec^{®} 2412 = Diphenylmethan-4,4'-diisocyanat, Hersteller: Huntsman.

### Beispiel 1

### Trennmittel 1:

1 Gew.-% Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 1 Gew.-% Luzenac^{®} 2, 1 Gew.-% DC^{®} 190, 90,98 Gew.-% Wasser.

### Beispiel 2

### Trennmittel 2:

1 Gew.-°s Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 5 Gew.-% Luzenac^{®} 2, 1 Gew.-% DC^{®} 190, 86,98 Gew.-% Wasser.

### Beispiel 3

### Trennmittel 3:

1 Gew.-% Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 10 Gew.-% Luzenac^{®} 2, 1 Gew.-% DC^{®} 190, 0,25 % Xanthan Gum, 81,73 Gew.-% Wasser.

### Vergleichsbeispiel A:

(angelehnt an Beispiel 7 aus US-41 31 662, das in dieser Schrift am besten bewertet wurde, aber ohne organische Lösungsmittel wie Toluol und Dichlormethan, die nicht mehr eingesetzt werden sollen):
10 Gew.-% Luzenac^{®} 2, 1 Gew.-% Natriumoleat, 89 Gew.-% Wasser.

### Vergleichsbeispiel B:

(angelehnt an Beispiel Nr. 1 aus DE-A-40 20 036):
16 Gew.-% Polyol^{®} 130, 4 Gew.-% Unithox^{®} 450, 1 Gew.-% DC^{®} 190, 79 Gew.-% Wasser.

### Trennmittelversuche:

Die Trennmittel wurden mittels einer 0,5 mm Düse in praxisnahen Mengen von 20 g/m² auf Testmetallplatten aufgesprüht und ein schäumbares Polyurethansystem bestehend aus 100 Teilen Desmophen^{®} PU 21IK01, 3,5 Teilen Wasser, 0,4 Teilen Tegoamin^{®} TA 33, 0,25 Teilen Tegoamin^{®} AS-1, 0,7 Teilen Diethanolamin, 0,5 Teilen Tegostab^{®} EP-K-38, 0,2 Teilen Essigsäure (60 % in Wasser), 63,5 Teilen Suprasec^{®} 2412 auf diese Platten in einer Kastenform bei 55 °C aufgeschäumt.
Nach dem Aushärten (10 Minuten) wurden die Metallplatten unter Verwendung eines Federkraftmessers vom Schaum abgezogen, um ein Maß für die Trennwirkung zu messen.

### Bewertung der Trennversuche:

| Trennmittel | Kraft zum Abziehen der Metallplatte vom Schaum [kg] | Beurteilung der Schaumoberfläche |
|---|---|---|
| 1 | 1,8 | leicht geschlossen, trocken |
| 2 | 1,3 | offen, trocken |
| 3 | 1,3 | feinporig, offen, trocken |
| A | 1,3 | feinporig offen, trocken |
| B | 2,0 | leicht geschlossen, schmierig |

## Patentansprüche

1. Wässrige Dispersionen, enthaltend im Wesentlichen Wasser, trennaktive Mittel und Emulgatoren, **dadurch gekennzeichnet, dass** als trennaktive Mittel eine Kombination aus
A) mindestens einem trennaktiven Mittel, ausgesucht aus der Gruppe Seifen, Öle, Wachse und Silicone und
B) Talkum
verwendet wird, wobei die Dispersion
A) 0,5 bis 40 Gew.-% mindestens eines trennaktiven Mittels ausgesucht aus der Gruppe Seifen, Öle, Wachse und Siliconen und
B) 0,1 bis 15 Gew.-% Talkum,
C) 0,1 bis 10 Gew.-% Emulgatoren,
D) 0,1 bis 5 Gew.-% Katalysatoren,
E) 0,1 bis 5 Gew.-% Schaumstabilisatoren,
F) 0,1 bis 2 Gew.-% Viskositätsmodifizierer,
G) 0,1 bis 2 Gew.-% übliche Konservierungsmittel, Bakterizide, Fungizide und Antioxidantien und
H) ad 100 Gew.-% Wasser,
enthält.

2. Wässrige Dispersionen gemäß Anspruch 1, **dadurch gekennzeichnet, dass** die trennaktiven Mittel A) eine mittlere Molmasse > 200 aufweisen.

3. Wässrige Dispersionen gemäß einem der Ansprüche 1 oder 2, **dadurch gekennzeichnet, dass** als trennaktive Mittel A) mindestens eine Verbindung ausgesucht aus der Gruppe der flüssigen, festen, natürlichen oder synthetischen Wachse, Öle, Ester von Carbonsäuren mit Alkoholen oder Fettalkoholen, Metallseifen, Silicone, mitverwendet wird.

4. Wässrige Dispersionen gemäß mindestens einem der Ansprüche 1 bis 3, **dadurch gekennzeichnet, dass** als Talkum B) anorganische Mineralien aus der Familie der Schichtsilicate verwendet wird.

5. Wässrige Dispersionen gemäß mindestens einem der Ansprüche 1 bis 4, **dadurch gekennzeichnet, dass** als Talkum B) ein Talkum mit einer Zusammensetzung von 35 bis 70 Gew.-% SiO₂, 5 bis 40 Gew.-% MgO, 5 bis 20 Gew.-% Al₂O₃ und 1 bis 5 Gew.-% Fe₂O₃ verwendet wird.

6. Wässrige Dispersionen gemäß mindestens einem der Ansprüche 1 bis 5, **dadurch gekennzeichnet, dass** als Emulgator C) mindestens eine Verbindung ausgesucht aus der Gruppe der anionischen, kationischen, zwitterionischen und nichtionischen Tenside verwendet wird.

7. Verwendung der Trennmittel gemäß mindestens einem der Ansprüche 1 bis 6 zur Herstellung von Polyurethan-Formkörpern.

## Claims

1. Aqueous dispersions containing substantially water, agents having release activity and emulsifiers **characterized in that** a combination of
A) at least one agent having a release activity, selected from the group consisting of soaps, oils, waxes and silicones, and
B) talc
is used as agents having release activity, wherein the dispersion contains
A) from 0.5 to 40% by weight of at least one agent having release activity, selected from the group consisting of soaps, oils, waxes and silicones, and
B) from 0.1 to 15% by weight of talc,
C) from 0.1 to 10% by weight of emulsifiers,
D) from 0.1 to 5% by weight of catalysts,
E) from 0.1 to 5% by weight of foam stabilizers,
F) from 0.1 to 2% by weight of viscosity modifiers,
G) from 0.1 to 2% by weight of customary preservatives, bactericides, fungicides and antioxidants and
H) water to 100% by weight.

2. Aqueous dispersions according to Claim 1, **characterized in that** the agents A) having a release activity have an average molar mass of >200.

3. Aqueous dispersions according to either of Claims 1 and 2, **characterized in that** at least one compound selected from the group consisting of the liquid, solid, natural or synthetic waxes, oils, esters of carboxylic acids with alcohols or fatty alcohols, metal soaps and silicones is concomitantly used as agents A) having a release activity.

4. Aqueous dispersions according to at least one of Claims 1 to 3, **characterized in that** inorganic minerals from the family consisting of the sheet silicates are used as talc B).

5. Aqueous dispersions according to at least one of Claims 1 to 4, **characterized in that** a talc having a composition of from 35 to 70% by weight of SiO₂, from 5 to 40% by weight of MgO, from 5 to 20% by weight of Al₂O₃ and from 1 to 5% by weight of Fe₂O₃ is used as talc B).

6. Aqueous dispersions according to at least one of Claims 1 to 5, **characterized in that** at least one compound selected from the group consisting of the anionic, cationic, zwitterionic and nonionic surfactants is used as emulsifier C).

7. Use of the release agents according to at least one of Claims 1 to 6 for the production of polyurethane moldings.

## Revendications

1. Dispersions aqueuses contenant essentiellement de l'eau, des agents de démoulage et des émulsifiants, **caractérisées en ce qu'**on utilise comme agent de démoulage une association de
A) au moins un agent de démoulage choisi parmi des savons, des huiles, des cires et des silicones et
B) de talc,
les dispersions contenant
A) 0,5 à 40 % en poids d'au moins un agent de démoulage choisi parmi des savons, des huiles, des cires et des silicones et
B) 0,1 à 15 % en poids de talc,
C) 0,1 à 10 % en poids d'émulsifiants,
D) 0,1 à 5 % en poids de catalyseurs,
E) 0,1 à 5 % en poids de stabilisants de mousse,
F) 0,1 à 2 % en poids de modificateurs de viscosité,
G) 0,1 à 2 % en poids de conservateurs, bactéricides, fongicides et antioxydants usuels et
H) en complément à 100 % en poids, de l'eau.

2. Dispersions aqueuses selon la revendication 1, **caractérisées en ce que** les agents de démoulage A) ont une masse moléculaire moyenne supérieure à 200.

3. Dispersions aqueuses selon la revendication 1 ou 2, **caractérisées en ce qu'**on utilise en même temps comme agent de démoulage A) au moins un composé choisi dans le groupe des cires liquides, solides, naturelles ou synthétiques, des huiles, des esters d'acides carboxyliques avec des alcools ou des alcools gras, des savons métalliques, des silicones.

4. Dispersions aqueuses selon au moins l'une des revendications 1 à 3, **caractérisées en ce qu'**on utilise en tant que talc B) des minéraux inorganiques choisis dans la famille des silicates lamellaires.

5. Dispersions aqueuses selon au moins l'une des revendications 1 à 4, **caractérisées en ce qu'**on utilise en tant que talc B) un talc ayant une composition de 35 à 70 % en poids de SiO₂, 5 à 40 % en poids de MgO, 5 à 20 % en poids de Al₂O₃ et 1 à 5 % en poids de Fe₂O₃.

6. Dispersions aqueuses selon au moins l'une des revendications 1 à 5, **caractérisées en ce qu'**on utilise comme émulsifiant C) au moins un composé choisi dans le groupe des tensioactifs anioniques, cationiques, zwitterioniques et non ioniques.

7. Utilisation des agents de démoulage selon au moins l'une des revendications 1 à 6, pour la production de corps moulés à base de polyuréthanne.
